# EUROPÄISCHE PATENTANMELDUNG

(11) **EP 0 535 661 A1**
(43) Veröffentlichungstag der Anmeldung: **07.04.1993**
(21) Anmeldenummer: 92116785.4
(22) Anmeldetag: 30.09.1992
(51) Int. Cl.: C02F 1/26, C02F 11/12

(54) **Verfahren zur Entfernung von Wasser und ggf. von in hydrophilen Lösungsmitteln löslichen Stoffen aus feinzerteilten Feststoffen**

(30) Priorität: 30.09.1991 DE 4132514
(71) Anmelder: LINDE-KCA-Dresden GmbH, D-01067 Dresden (DE)
(72) Erfinder: Roland, Klaus, Dipl.-ing., O-8101 Medingen (DE)
(74) Vertreter: Schaefer, Gerhard, Dr.

(57) **Zusammenfassung**

Die Erfindung betrifft ein Verfahren zur Entfernung von Wasser und ggf. von in hydrophilen Lösungsmitteln löslichen Stoffen aus feinzerteilten Feststoffen, z.B. Klärschlamm.

Die Feststoffe werden schrittweise I, II, III im Gegenstrom mit dem Lösungsmittel gewaschen und konzentriert. Dabei wird das Lösungsmittel zumindest im ersten Schritt I stufenlos im Gegenstrom zu den Feststoffen geführt. Anschließend wird das an den Feststoffen noch anhaftende Lösungsmittel bevorzugt in einem Verdampfer V abgetrennt.

Das abgetrennte Lösungsmittel wird einer Destillationskolonne D zur Aufkonzentrierung zugeführt und danach zusammen mit dem zurückgewonnenen Lösungsmittel aus dem abgestreiften lösungsmittelhaltigen Wasser zur Gegenstromwäsche eingesetzt.

## Beschreibung

Die Erfindung betrifft ein verfahren zur Entfernung von Wasser und ggf. von in hydrophilen Lösungsmitteln löslichen Stoffen aus feinzerteilten Feststoffen, insbesondere Klärschlamm, mittels Gegenstromwäsche mit einem hydrophilen Lösungsmittel und anschließender Abtrennung des Lösungsmittels von den Feststoffen sowie Rückgewinnung des Lösungsmittels in konzentrierter Form aus dem abgestreiften lösungsmittelhaltigen Wasser.

Aufgrund immer knapper werdender Deponieflächen und ökologischer Probleme bei der landwirtschaftlichen Verwertung von Klärschlämmen gewinnt die thermische Behandlung von Klärschlämmen und anderen feuchten Abfallstoffen zunehmend an Bedeutung.

Für eine wirtschaftliche thermische Behandlung ist aber eine effektive Vortrocknung des zu behandelnden feuchten Gutes eine wesentliche Voraussetzung. So ist beispielsweise der hohe Wassergehalt von Klärschlämmen eines der größten Probleme bei der Klärschlammverbrennung, da im Verbrennungsofen ein Großteil der zur Verfügung stehenden Energie zur Verdampfung des Wasseranteils verbraucht wird.

Auch eine Vortrocknung des Klärschlamms nach den bisher üblichen Verfahren verbraucht in etwa die Energie, die bei der anschließenden Verbrennung erzeugt wird, so daß keine Energie gewonnen wird, die zum wirtschaftlichen Ausgleich der thermischen Entsorgung der Klärschlämme beitragen könnte. Daher kommt der Entwicklung kostengünstiger Entwässerungs- und Trocknungstechnologien eine zentrale Bedeutung zu.

Jedoch auch im Falle einer landwirtschaftlichen Verwertung von Klärschlämmen wäre eine effiziente Trocknung von großer Bedeutung, da Transportkosten und Lagerfähigkeit relevante Faktoren für diesen Entsorgungsweg darstellen.

Die bei der Wäsche mit hydrophilen Lösungsmitteln gleichzeitig mit der Trocknung erreichbare Reduzierung von organischen Schadstoffen und die mit der Verringerung der Klärschlammasse durch die Trocknung verbundene Möglichkeit, den Klärschlamm auf größere landwirtschaftliche Flächen auszubringen, können der landwirtschaftlichen Verwertung des Klärschlamms eine neue Akzeptanz eröffnen.

Verbreitet zur Trocknung von Klärschlämmen sind bislang Verfahren mit Verdampfung des Schlammwassers. Man unterscheidet die direkte Trocknung mit Rauch- oder Heißgasen und die indirekte Trocknung über Heizflächen.

Im allgemeinen haben diese Verfahren einen spezifischen Wärmeverbrauch von 3000 bis 3800 kj pro kg zu verdamfendes Wasser, wobei Primärenergieträger oder hoch gespannter Heizdampf, d.h. Energien mit hoher Wertigkeit, zum Einsatz kommen.

Mit der DE-OS 19 22 611 wurde ein Verfahren zur Gewinnung von stickstoffhaltigem Material und ggf. Fetten oder Ölen aus Klärschlämmen vorgeschlagen. Dabei wird mechanisch vorentwässerter Schlamm einer Lösungsmittel-Gegenstrom-Extraktion mit einem hydrophilen organischen Lösungsmittel in aufeinanderfolgenden Stufen unterworfen. Dieses Verfahren bewirkt auch, daß die Wasserfeuchte des Schlammes durch die Feuchte des Lösungsmittels ausgetauscht wird.

Dabei wird das Lösungsmittel stufenweise im Gegenstrom zum Schlamm geführt. Während sich der Schlamm mit dem Lösungsmittel belädt, nimmt der Flüssigstrom lösliche Stoffe und das abgestreifte Wasser auf. Das auf diese Weise anfallende Lösungsmittel-Wasser-Gemisch wird vollständig einer Destillation zugeführt, um das Lösungsmittel abzutrennen und die gelösten Fette oder Öle in unlösliche Form zu überführen. Das destillativ abgetrennte Lösungsmittel wird wieder zur Gegenstrom-Extraktion eingesetzt.

Der mit dem Lösungsmittel beladene Schlamm wird einem nicht näher beschriebenen Lösungsmittelentferner zugeführt. Dort wird das Lösungsmittel wieder vom Schlamm abgetrennt und anschließend in ein Lösungsmittellager eingeleitet. Von da gelangt es schließlich wieder zur stufenweisen Gegenstrom-Extraktion.

Dieses Verfahren hat jedoch den Nachteil, daß noch sehr viel Energie benötigt wird und/oder hohe Investitionen erforderlich sind. Das wird in den angegebenen Beispielen dokumentiert, aus denen hervorgeht, daß das aus der ersten Stufe austretende Lösungsmittel-Wasser-Gemisch eine sehr hohe Lösungsmittelkonzentration aufweist und deshalb einen hohen Destillationsaufwand zur Rückgewinnung des Lösungsmittels erfordert.

Aufgabe der vorliegenden Erfindung ist es, ein Verfahren der eingangs genannten Art so auszugestalten, daß eine weitgehende Trocknung der feuchten Feststoffe und ggf. die Entfernung unerwünschter löslicher Stoffe wie Öle, Fette, Kohlenwasserstoffe und anderer organischer Schadstoffe aus den Feststoffen auf wirtschaftliche Weise erreicht wird.

Diese Aufgabe wird erfindungsgemäß dadurch gelöst, daß die Gegenstromwäsche in mehreren Schritten durchgeführt wird, wobei in dem von der Feststoffeintrittsseite her gesehenen ersten Schritt, ggf. auch in weiteren dem ersten Schritt folgenden Schritten das (sich mit Wasser anreichernde) Lösungsmittel stufenlos im Gegenstrom zu den Feststoffen geführt wird und in dem letzten Schritt, ggf. auch in weiteren dem letzten Schritt davor angeordneten Schritten die Feststoffe und das Lösungsmittel gemischt und anschließend die Feststoffe durch mechanische Abtrennung vom Lösungsmittel wieder konzentriert werden, wobei das nach diesem bzw. nach jedem dieser Schritte abgetrennte, mit Wasser und ggf. anderen löslichen Stoffen angereicherte Lösungsmittel in dem davor angeordneten Schritt eingesetzt wird.

Ausgangspunkt zur Konzipierung des erfindungsgemäßen Verfahrensprinzipes war, die Wasserfeuchte der Feststoffe einerseits möglichst weitgehend zu ersetzen durch eine Feuchte mit wesentlich geringerer spezifischer Verdampfungswärme und andererseits eine Strukturveränderung des Schlammes zu erreichen, um die Feuchtemenge durch mechanische Abtrennung stark reduzieren zu können.

Durch diese zwei Faktoren soll der Verdampfungsaufwand zur Beseitigung der Restfeuchte der Feststoffe auf ein Minimum herabgesetzt werden.

Zur Erfüllung der der Erfindung zugrundeliegenden Aufgabe soll jedoch auch die Einsatzmenge an Lösungsmittel und damit der destillative Aufwand zur Rückgewinnung des Lösungsmittels aus dem abgestreiften Wasser verringert werden.

Der vorliegenden Erfindung liegt nun die Erkenntnis zugrunde, daß durch eine kontinuierliche Gegenstromführung von Lösungsmittel und Feststoffen zumindest im ersten Schritt der Wäsche die Lösungsmitteleinsatzmenge für die Gegenstromwäsche erniedrigt wird, wodurch der Energieaufwand zur Rückgewinnung des Lösungsmittels in konzentrierter Form aus dem abgestreiften Wasser und/oder die Anzahl der Schritte gesenkt wird.

Im extremen Fall besteht die Gegenstromwäsche zwischen Feststoffen und Lösungsmitteln aus nur zwei Schritten:

Einem Schritt mit stufenloser Gegenstromführung und einem Schritt, in dem das eingesetzte konzentrierte Lösungsmittel mit den schon an Lösungsmitteln angereicherten, aus dem ersten Schritt austretenden Feststoffen vermischt und anschließend wieder soweit wie möglich mechanisch vom Feststoff abgetrennt wird.

Die stufenlose Gegenstromwäsche erfolgt für leicht suspendierende Feststoffe vorteilhafterweise in speziell umgerüsteten Dekantern.

Dabei besteht die Aufgabe des Dekanters nicht wie bei handelsüblichen Dekantern darin, eine Flüssig-Fest-Trennung vorzunehmen, sondern einen bereits entwässerten Dickstoff im sedimentierten Zustand zu halten und ihn im Gegenstrom zum zugeführten Lösungsmittel zu bewegen.

Der Dekanter wird also entsprechend den Ansprüchen der Gegenstromwäsche angepaßt. Dies bedeutet, daß der üblicherweise als Trennapparat dienende Dekanter so umgerüstet wird, daß er einen hohen Stoffaustausch bietet.

Ein solcher Dekanter, auch als Reaktor bezeichnet, besteht aus einer rotierenden Trommel, in der eine mitrotierende ein- oder mehrgängige Schnecke zum Fördern und zur Bearbeitung der Feststoffe auf der Trommelinnenwand axial angeordnet ist.

Jeder Schneckengang besteht aus zwei hintereinander angeordneten Schraubenblättern unterschiedlichster Konstruktion. Das erste Schraubenblatt füllt im wesentlichen den gesamten Durchmesser der Trommel aus und weist zahlreiche Unterbrechungen in Form von Lücken oder Schlitzen auf oder ist aus versetzt angeordneten Schraubenblattelementen gebildet.

Das dahinter angeordnete zweite Schraubenblatt weist dagegen einen Abstand zur Trommelinnenwand auf und kann durchgehend ohne Unterbrechungen ausgebildet sein.

Beim Betrieb des Reaktors werden die sedimentierten Feststoffe aufgrund einer Differenzgeschwindigkeit zwischen Trommel und Schnecke transportiert. Dabei werden die Feststoffe von dem ersten Schraubenblatt gesammelt, umgelagert und jeweils bis zu einer Unterbrechung gefördert und von dem zweiten Schraubenblatt die vom ersten Schraubenblatt auf der Trommelinnenwand in Bahnen abgelegten Feststoffe wieder gleichmäßig in Förderrichtung verstrichen.

Auf diese Weise wird die Oberfläche des Feststoffes während des Transportes durch den Reaktor ständig und wiederholend erneuert und dadurch die beabsichtigte Wäsche zwischen Flüssigkeit und Feststoff intensiviert.

Durch Aufgabe der Flüssigkeit auf der der Aufgabe des Feststoffes gegenüberliegende Seite der Trommel und durch Anordnung eines Wehres für den Flüssigkeitsaustrag und Ausbildung einer Seite der Trommel in konischer Form bis zum Feststoffaustrag wird der Gegenstrom erzielt.

Eine bedeutende Senkung des Energieaufwands für die destillative Rückgewinnung des Lösungsmittels aus dem abgestreiften Wasser wird durch eine Weiterentwicklung des Verfahrens erreicht, die darin besteht, daß das nach der Gegenstromwäsche vorliegende abgestreifte lösungsmittelhaltige Wasser und/oder nur ein oder mehrere Teilströme vom Lösungsmittel-Wasser-Gemisch vor Beendigung der Gegenstromwäsche abgezogen werden und einer Destillation zur Aufkonzentrierung des Lösungsmittels und Abtrennung des Wassers unterzogen werden. Danach wird das aufkonzentrierte Lösungsmittel zusammen mit dem zurückgewonnenen Lösungsmittel aus der Abtrennung von den Feststoffen zur Gegenstromwäsche eingesetzt. Vorteilhafterweise werden die Teilströme zwischen den Schritten, insbesondere zwischen den vom Feststoffeintritt aus gesehenen ersten Schritten, abgezweigt.

Diese Maßnahme bewirkt im Zusammenwirken mit der stufenlosen Gegenstromwäsche, daß das aus dem ersten Schritt austretende Wasser nur noch wenig Lösungsmittel enthält und im Extremfall praktisch frei von Lösungsmittel ist und einer Destillation nicht unterzogen werden muß.

Vorzugsweise wird das von den Feststoffen abgetrennte Lösungsmittel einer Destillation zur Aufkonzentrierung zugeführt und danach zusammen mit dem zurückgewonnenen Lösungsmittel aus dem abgestreiften lösungsmittelhaltigen Wasser und/oder nur aus dem Teilstrom oder den Teilströmen zur Gegenstromwäsche eingesetzt.

Bei der Ausgestaltung des Verfahrens ist es weiterhin von Vorteil, daß der Teilstrom oder die Teilströme und im Falle der destillativen Unterziehung des nach der Gegenstromwäsche vorliegenden abgestreiften lösungsmittelhaltigen Wassers, dieses und das von den Feststoffen abgetrennte Lösungsmittel einer gemeinsamen Destillation zur Aufkonzentrierung und Rückgewinnung des Lösungsmittels unterworfen werden.

Als hydrophile Lösungsmittel eignen sich besonders Aceton, Methanol oder Ethanol. Auch Mischungen dieser Lösungsmittel sind möglich.

Vorzugsweise wird das Lösungsmittel in einem der Wäsche nachgeschalteten Gegenstrom-Verdampfer von den Feststoffen abgetrennt. Dabei wird das verdampfte Lösungsmittel im Gegenstrom zu den Feststoffen innerhalb des Verdampfers rückgeführt, wodurch eine selektive Verdampfung und damit eine Aufkonzentrierung des Lösungsmittels erreicht wird. Außerdem sinkt dadurch der Wärmebedarf des Verdampfers. Das ist dann besonders vorteilhaft, wenn das Ziel nicht darin besteht, die Feststoffe vollständig trocken zu erhalten.

Die Aufkonzentrierung des Lösungsmittels im Gegenstrom-Verdampfer kommt also zu der Aufkonzentrierung in der Destillationskolonne noch dazu, so daß der Gesamtaufwand für das Verfahren gesenkt wird.

Vorteilhaft ist es auch, daß die Gegenstromwäsche bis zu einer Lösungsmittelkonzentration in der Feuchte des Feststoffes von 60 bis 90% (Ma) im letzten Schritt geführt wird und eine Entfeuchtung des Feststoffes mittels einer mechanischen Presse auf 50 bis 70% (Ma) Trockensubstanz einschließt.

Eine weitere Ausgestaltung des Verfahrens sieht vor, daß die durch das Lösungsmittel aus den Feststoffen herausgelösten Stoffe, insbesondere Fette, Öle und Kohlenwasserstoffe, bei der destillativen Abtrennung des Lösungsmittels aus dem abgestreiften Wasser abgetrennt und gewonnen werden.

Das erfindungsgemäße Verfahren eignet sich insbesondere zur Trocknung von Klärschlämmen, wobei auch Fette, Öle und andere organische, in hydrophilen Lösungsmitteln lösliche Stoffe aus diesen Schlämmen entfernt werden. Es läßt sich prinzipiell auch auf die analoge Behandlung anderer Feststoffe, also schlammähnlicher aber auch kristalliner und körniger Feststoffe anwenden. Grundsätzlich ist das Verfahren zur Behandlung feinzerteilter Feststoffe geeignet.

Im folgenden soll die Erfindung anhand von zwei in den Zeichnungen schematisch dargestellten Ausführungsbeispielen näher erläutert werden.

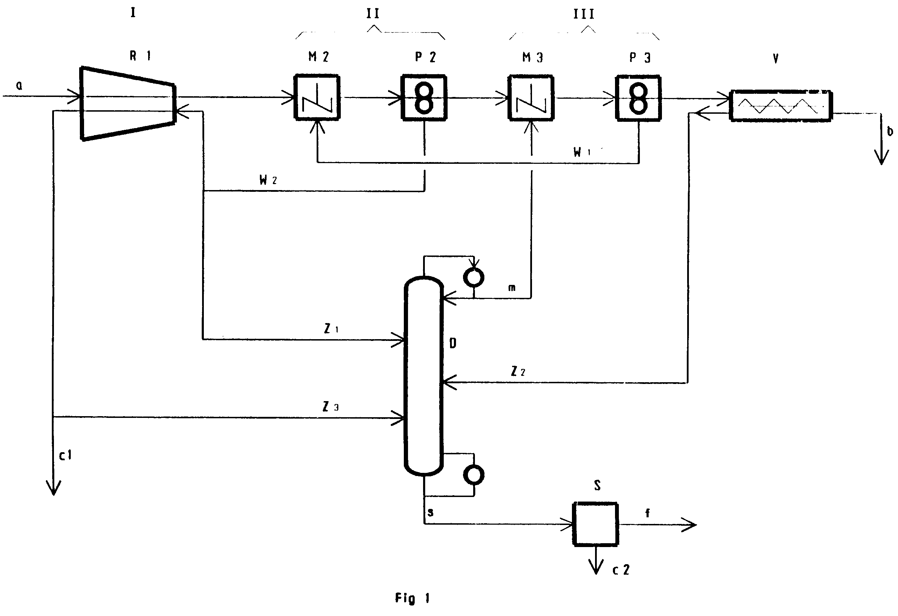

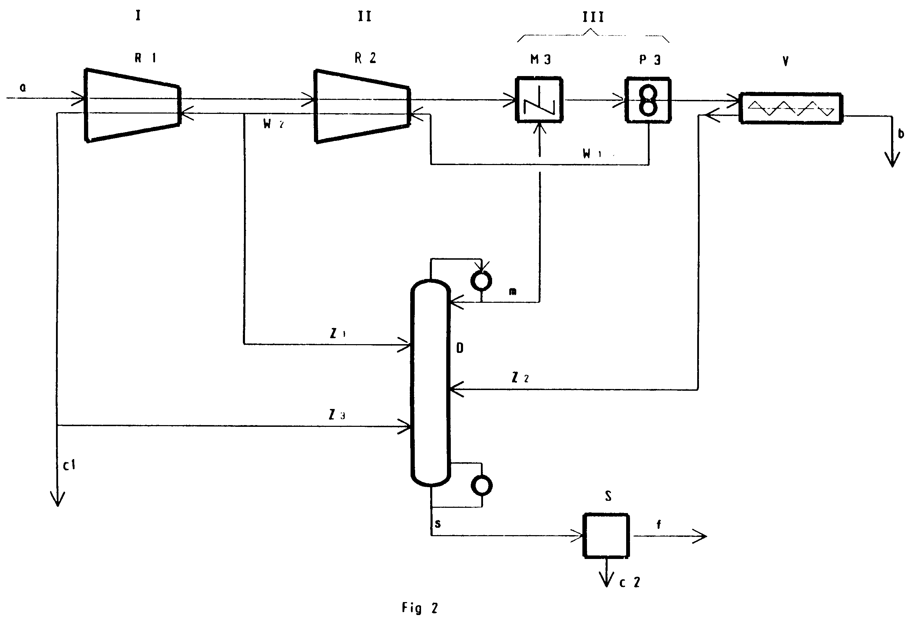

In den Figuren 1 und 2 wird in verschiedenen Ausführungen ein Verfahren zur Gegenstromwäsche von mechanisch vorentwässertem Klärschlamm dargestellt.

In beiden Beispielen wird die Gegenstromwäsche zwischen dem Lösungsmittel m, beipielsweise soll Aceton verwendet werden, und dem auf ca. 25% Trockensubstanzgehalt vorentwässerten Klärschlamm a in drei Schritten I, II und III durchgeführt.

Das durch Destillation in der Kolonne D aufkonzentrierte Aceton m wird in dem dritten Schritt III mit dem aus dem Schritt II kommenden Feststoff in einem Mischer M3 vermischt, wonach in der mechanischen Presse P3 des dritten Schrittes III der Feststoff auf ca. 65% Trockensubstanzgehalt bei einem Acetongehalt von 80% (Ma) in der Feuchte gebracht wird. Das abgetrennte Aceton-Wasser-Gemisch W1 mit 80% (Ma) Aceton wird zum 2. Schritt II und das im 2. Schritt II abgetrennte Aceton-Wasser-Gemisch W2 zum 1. Schritt I zurückgeführt.

Von der Presse P3 wird der Schlamm weiter zum Gegenstromverdampfer V geführt, in dem das Aceton durch Verdampfen mittels beheizter Schaufeln oder Schneckengängen vom Schlamm abgetrennt wird. Dabei wird das verdampfte Aceton im Gegenstrom zum Schlamm innerhalb des Verdampfers V rückgeführt, wodurch eine selektive Verdampfung und damit eine Vorkonzentrierung des Acetons erreicht wird.

Das auf diese Weise auf ca. 88% vorkonzentrierte Aceton wird anschließend über Leitung Z2 unmittelbar dampfförmig der Destillationskolonne D zugeführt. In der Destillationskolonne D wird das Aceton auf ca. 95% (Ma) aufkonzentriert und über Leitung m zum Mischer M3 geführt.

Zwischen dem ersten Schritt I und dem zweiten Schritt II wird ein Teilstrom vom abgetrennten Aceton-Wasser-Gemisch W2 abgezweigt und über Leitung Z1 und das abgetrennte Aceton-Wasser-Gemisch aus dem ersten Schritt I über Leitung Z3 der gemeinsamen Destillation in der Kolonne D zugeführt.

Der Schlamm wird im Gegenstromverdampfer auf einen Trockensubstanzgehalt von ca. 95% gebracht, wobei die Restfeuchte praktisch aus Wasser besteht, und über Leitung b abgezogen.

Das Sumpfprodukt der Destillationskolonne D wird über Leitung s einem Separator S zugeführt, der eine Abscheidung von Fetten und Ölen vom Wasser bewirkt. Die Fette und Öle, die auch organische Schadstoffe enthalten können, werden schließlich über Leitung f abgezogen, während das Wasser über Leitung c2 zur Kläranlage zurückgeführt wird.

Zur Verminderung des Wärmebedarfs der Destillationskolonne D ist weiterhin vorgesehen, daß die Leitung s mit der Leitung Z3 über einen in der Zeichnung nicht dargestellten Wärmeaustauscher derart verbunden ist, daß der Flüssigstrom von Z3 vor dem Eintritt in die Destillationskolonne D im Gegenstrom vorgewärmt wird.

Bei dem Verfahren nach Figur 1 wird der stufenlose Gegenstrom im ersten Schritt I und bei dem Verfahren nach Figur 2 sowohl im ersten als auch im zweiten Schritt II in den Reaktoren R1 bzw. R1 und R2 durchgeführt.

In Abhängigkeit der Güte und des Aufwandes bei der stufenlosen Gegenstromführung kann der Acetongehalt im abgestreiften Wasser Z3 prinzipiell gegen Null gesenkt werden, so daß eine destillative Aufarbeitung dieses Stromes Z3 im Extremfall nicht mehr notwendig ist und unmittelbar über Leitung c1 zur Kläranlage zurückgeführt werden kann.

## Patentansprüche

1. Verfahren zur Entfernung von Wasser und ggf. von in hydrophilen Lösungsmitteln löslichen Stoffen aus feinzerteilten Feststoffen, z.B. Klärschlamm, mittels Gegenstromwäsche mit einem hydrophilen Lösungsmittel und anschließender Abtrennung des Lösungsmittels von den Feststoffen sowie Rückgewinnung des Lösungsmittels in konzentrierter Form aus dem abgestreiften lösungsmittelhaltigen Wasser, **dadurch gekennzeichnet**, daß die Gegenstromwäsche in mehreren Schritten (I bis III) durchgeführt wird, wobei in dem von der Feststoffeintrittsseite her gesehenen ersten Schritt (I), ggf. auch in weiteren dem ersten Schritt folgenden Schritten das Lösungsmittel stufenlos im Gegenstrom zu den Feststoffen geführt wird und in dem letzten Schritt (III), ggf. auch in weiteren dem letzten Schritt davor angeordneten Schritten die Feststoffe und das Lösungsmittel gemischt und anschließend die Feststoffe durch mechanische Abtrennung vom Lösungsmittel wieder konzentriert werden, wobei das nach diesem bzw. nach jedem dieser Schritte abgetrennte, mit Wasser und ggf. anderen löslichen Stoffen angereicherte Lösungsmittel in dem davor angeordneten Schritt eingesetzt wird.

2. Verfahren nach Anspruch 1, dadurch gekennzeichnet, daß das nach der Gegenstromwäsche vorliegende abgestreifte lösungsmittelhaltige Wasser und/oder nur ein oder mehrere Teilströme vom Lösungsmittel-Wasser-Gemisch vor Beendigung der Gegenstromwäsche abgezogen werden und einer Destillation zur Aufkonzentrierung des Lösungsmittels und Abtrennung des Wassers unterzogen werden und danach das aufkonzentrierte Lösungsmittel zusammen mit dem zurückgewonnenen Lösungsmittel aus der Abtrennung von den Feststoffen zur Gegenstromwäsche eingesetzt wird.

3. Verfahren nach Anspruch 1 oder 2, dadurch gekennzeichnet, daß ein Teilstrom vorzugsweise von dem vom zweiten (II) zum ersten Schritt (I) der Gegenstromwäsche zurückgeführten Lösungsmittel-Wasser-Gemisch und im Fall, daß weitere Teilströme von der Gegenstromwäsche abgezogen werden, diesen von den zwischen den nächstfolgenden Schritten geführten Lösungsmittel-Wasser-Gemischen abgezweigt und der Destillation zugeführt werden.

4. Verfahren nach einem der Ansprüche 1 bis 3, dadurch gekennzeichnet, daß das von den Feststoffen abgetrennte Lösungsmittel einer Destillation zur Aufkonzentrierung zugeführt wird und danach zusammen mit dem zurückgewonnenen Lösungsmittel aus den abgestreiften lösungsmittelhaltigen Wasser und/oder nur aus dem Teilstrom oder den Teilströmen zur Gegenstromwäsche eingesetzt wird.

5. Verfahren nach einem der Ansprüche 1 bis 4, dadurch gekennzeichnet, daß die Abtrennung des Lösungsmittels von den Feststoffen durch Verdampfen vorgenommen und dabei der entstehende Dampf im Gegenstrom zu den Feststoffen geführt wird.

6. Verfahren nach einem der Ansprüche 1 bis 5, dadurch gekennzeichnet, daß das durch Verdampfen des Lösungsmittels von den Feststoffen gewonnene Lösungsmittel verflüssigt wird und danach zusammen mit dem zurückgewonnenen Lösungsmittel aus dem abgestreiften Wasser zur Gegenstromwäsche eingesetzt wird.

7. Verfahren nach einem der Ansprüche 1 bis 5, dadurch gekennzeichnet, daß der Teilstrom oder die Teilströme und im Falle der destillativen Unterziehung des nach der Gegenstromwäsche vorliegenden abgestreiften lösungsmittelhaltigen Wassers dieses und ggf. das von den Feststoffen abgetrennte Lösungsmittel einer gemeinsamen Destillation zur Aufkonzentrierung und Rückgewinnung des Lösungsmittels unterworfen werden.

8. Verfahren nach einem der Ansprüche 1 bis 7, dadurch gekennzeichnet, daß die Gegenstromwäsche bis zu einer Lösungsmittelkonzentration in der Feuchte des Feststoffes von 60 bis 90% (Ma) geführt wird und eine Entfeuchtung des Feststoffes mittels einer mechanischen Presse (P) auf 50 bis 70% (Ma) Trockensubstanz einschließt.

9. Verfahren nach einem der Ansprüche 1 bis 8, dadurch gekennzeichnet, daß als Lösungsmittel Aceton verwendet wird.

10. Verfahren nach einem der Ansprüche 1 bis 8, dadurch gekennzeichnet, daß als Lösungsmittel Methanol verwendet wird.

11. Verfahren nach einem der Ansprüche 1 bis 8, dadurch gekennzeichnet, daß als Lösungsmittel Ethanol verwendet wird.

12. Verfahren nach einem der Ansprüche 1 bis 11, dadurch gekennzeichnet, daß die durch das Lösungsmittel aus den Feststoffen herausgelösten Stoffe, insbesondere Fette, Öle und Kohlenwasserstoffe, bei der destillativen Abtrennung des Lösungsmittels aus dem abgestreiften Wasser abgetrennt und gewonnen werden.
